# EUROPEAN PATENT APPLICATION

(11) **EP 3 896 583 A1**
(43) Date of publication of application: **20.10.2021**
(21) Application number: 21164193.1
(22) Date of filing: 23.03.2021
(51) Int. Cl.: G06F 16/9535

(54) **INFORMATION RECOMMENDATION SYSTEM AND METHOD FOR RECOMMENDING INFORMATION**

(30) Priority: 16.04.2020 JP 2020073530
(71) Applicant: Hitachi, Ltd., Tokyo 100-8280 (JP)
(72) Inventor: Basu, Anirban, Tokyo, 100-8280 (JP); Kumagai, Yoko, Tokyo, 100-8280 (JP)
(74) Representative: Manitz Finsterwald Patent- und Rechtsanwaltspartnerschaft mbB

(57) **Abstract**

Provided is an information recommendation system that includes a trust management framework that generates alternatives of information that has a history and is evaluated, based on a perspective about adoption criteria for evaluation of the information input to search the information, and criteria for ranking the information, being input to search the information.

## Description

### CROSS-REFERENCE TO PRIOR APPLICATION

This application relates to and claim the benefit of priority from Japanese Patent Application No.2020-73530 filed on April 16, 2020 the entire disclosure of which is incorporated herein by reference.

### BACKGROUND ART

The present invention relates to an information recommendation system and a method for recommending information.

Systems for recommending information based on evaluation of the information, which is typified by so-called word of mouth, are known (e.g., refer to Japanese Patent Application Publication No. 2013-196120).

Patent Document 1 discloses a word-of-mouth information system that includes a word-of-mouth information restriction function of restricting spread of word-of-mouth information in accordance with setting made by a store employee. A user confidence determination-calculation unit determines use results of a store recorded by a registrant to determine and calculate confidence of a user. When the confidence of the user is low, the user is to be restricted. A registrant restriction processing unit performs processing of restricting a registration of word-of-mouth information by the user to be restricted, and a browser restriction processing unit performs processing of restricting browsing of word-of-mouth information by a user who browses word-of-mouth information registered by the user to be restricted.

Patent Document 1 discloses a technique in which an algorithm for recommending information is fixed, so that the algorithm is not personalized depending on user's preference.

The present invention has been made in view of the above-mentioned problem, and an object thereof is to provide an information recommendation system and a method for recommending information, being capable of recommending information personalized depending on user's preference.

### SUMMARY

To solve the above-mentioned problem, an information recommendation system according to an aspect of the present invention is characterized by including a trust management unit that generates alternatives of information for information, which has a history and is evaluated, based on a perspective about adoption criteria for evaluation of information input to search the information, and criteria for ranking the information, being input to search information.

The present invention enables achieving an information recommendation system and a method for recommending information, being capable of recommending information personalized depending on user's preference.

### BRIEF DESCRIPTION OF THE DRAWINGS

FIG. 1 is a diagram illustrating a schematic configuration of an information recommendation system according to an embodiment;
FIG. 2 is a sequence diagram illustrating information processing of an information recommendation system according to an embodiment;
FIG. 3 is a sequence diagram illustrating information creation processing of an information recommendation system according to an embodiment;
FIG. 4 is a sequence diagram illustrating information update processing of an information recommendation system according to an embodiment;
FIG. 5 is a sequence diagram illustrating information archive processing of an information recommendation system according to an embodiment;
FIG. 6 is a sequence diagram illustrating information evaluation processing of an information recommendation system according to an embodiment;
FIG. 7 is a sequence diagram illustrating inference processing of an information recommendation system according to an embodiment;
FIG. 8 is a sequence diagram illustrating details of inference processing of an information recommendation system according to an embodiment;
FIG. 9 is a diagram illustrating an example of a format of information used in an information recommendation system according to an embodiment;
FIG. 10 is a diagram illustrating an example of a format of a database used in an information recommendation system according to an embodiment;
FIG. 11 is a diagram illustrating an example of an input screen in an information recommendation system according to an embodiment; and
FIG. 12 is a diagram illustrating an example of an output screen in an information recommendation system according to an embodiment.

### DETAILED DESCRIPTION OF THE EMBODIMENT

Hereinafter, an embodiment of the present invention will be described with reference to the accompanying drawings. The embodiment described below does not limit the invention according to the scope of claims, and all elements and combinations described in the embodiment are not necessarily required for the solution of the invention.

In the drawings illustrating the embodiment, parts having the same function are denoted by the same reference numerals, and duplicated description thereof is eliminated.

Although the following description may use expression, "xxx data", as an example of information, information may use any data structure. That is, to indicate that information does not depend on data structure, the "xxx data" can be referred to as an "xxx table". The "xxx data" also may be simply referred to as "xxx". In the following description, a configuration of each piece of information is an example, so that information may be held by being split, or by being combined.

An information recommendation system of the present embodiment may be configured based on the following configuration, for example.

The information recommendation system of the present embodiment may be typically based on existence of, for example, a robust distributed ledger technique such as Hyperledger(registered trademark) Fabric that is a block chain framework of an open source. The information recommendation system also may be configured based on existence of a system providing a graph structure for a relationship between identity to be involved and a part of information. The information recommendation system further may be configured based on existence of strong identity based on Public Key Infrastructure (PKI), preferably post quantum cryptography.

When used for information recommendation to select a shared factory receiving orders from multiple companies, the information recommendation system of the present embodiment may be configured based on a storage technique of undeniable transaction having tampering resistance, such as existence of a block chain. This is intrinsically distributed implementation of a trust management framework. The information recommendation system may be configured based on existence of a procedure model for defining a graph relationship among various components, being output of a manufacturing process. When there is a relationship among entities in charge of creation, update, evaluation, and archive of information created from a manufacturing process, the information recommendation system may be configured based on existence of a graph structure providing the relationship. In general, the evaluation is performed in a company, and the creation, update, and archive are performed in a factory. The information recommendation system also may be configured based on existence of a strong identity mechanism for every entity in the information recommendation system.

When used for recommendation of a product or a service with a relationship among entities in charge of creation, update, evaluation, and archive of information, the information recommendation system of the present embodiment may be configured based on existence of a graph structure providing the relationship.

Subsequently, a specific example of a "perspective" and "criteria" used in the present specification will be described based on two use cases.

First, a use case is considered in which the information recommendation system of the present embodiment is used for recommending a product or a service. In this case, multiple instances may exist.

Then, the "perspective" is defined by how to form various selective aspects on a product or a service in consideration of various selections of life cycle events as with evaluation so that each of the aspects agrees with the "criteria". The term, "criteria", is defined as a term for a user to compare multiple alternatives.

For example, a use case is considered in which a user purchases an automobile. The user may have "criteria" such as (a) eco-friendly, (b) speed, (c) acceleration, (d) safety features, and (e) size. "Perspectives" may include (i) industry-standard authentication (that is also evaluation), (ii) comments from a friend close to the user, (iii) comments from an industry expert, (iv) a main incident history that can be recorded as evaluation, and the like.

The information recommendation system of the present embodiment includes a trust management framework (trust management unit) that can create two or more alternatives for each automobile in agreement with an initial search parameter by using these "perspectives". Next, the alternatives created are compared with the "criteria" defined by the user to create ranking.

Subsequently, a use case is considered in which the information recommendation system of the present embodiment is used for verifying certain text to determine whether it can be recommend. This case has a single instance.

Then, the "perspective" is defined by how to form various selective aspects on a document in consideration of life cycle events and selections different in evaluation as with evaluation so that each of the aspects agrees with the "criteria".

For example, an organization may consider evaluation of a user for credit scoring (customer verification: Know Your Customer). The organization can have "criteria" such as (a) a credit history (that can be stored as an update of information), (b)a crime history (that can be stored as an update of information), (c) an annual income, (d) a growth rate of annual income, (e) other active loan, and (f) personal liabilities. "Perspectives" includes (i) evaluation by a bank, (ii) evaluation by a credit card company, (iii) evaluation by a law enforcement organization, (iv) evaluation by income tax agencies, and the like.

The trust management framework of the information recommendation system of the present embodiment includes can create some alternatives for information on the user by using these "perspectives". Next, the alternatives created is compared with the "criteria" defined by the organization, and eventual ranking of the alternatives is created.

The information recommendation system of the present embodiment may include a configuration below.

First, information (which may be here information on a product or a service) without a traceable origin is not a target of the information recommendation system of the present embodiment, and thus is regarded as a "fake". Information with a traceable origin and without verifiable observation may be questionable . A recording medium to be evidence for an origin, an update, or a verification is, for example, preferably configured to be decentralized using a distributed ledger technique, prevented from being tampered, and easily retrievable.

Creation of a trustworthiness score on information requires analysis aware of a group and temporality of "criteria" using, for example, a combination of a static machine learning model, a cause and effect model, and a recurrent neural network. A user has "criteria" used as criteria for evaluation. The "criteria" may be completely set by the user, or may be selected from a group of "criteria" maintained by the trust management framework. Which should be used depends on a use case. The user has a preference, i.e., a "perspective", to be considered during analysis processing using the trust management framework.

When only one information item is considered, a record of a history of information is analyzed in view of, for example, specific "perspectives" such as a signature verification and an FOAF (Friend-Of-A-Friend) relationship in comment. Some alternatives are created using these "perspectives". Each of the alternatives have a specific "score" for corresponding one of items of "criteria". An inference aware of "criteria" (such as an inference using multi-criteria decision making analysis) is used for describing which alternative is most recommended, and also emphasizes a combination of "perspectives" that creates an alternative.

When multiple information items are considered, the process described above can be used. However, an alternative can be also defined by using each item without requiring a "perspective". Alternatively (in a more typical case), each item can create two or more alternatives. The inference aware of "criteria" emphasizes a combination of "perspectives" used for generating an alternative to be ultimately selected.

Additionally, an eventual inference can be further refined using a policy designated by a "perspective".

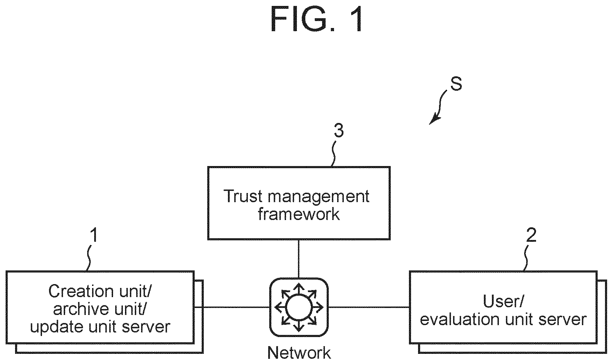

FIG. 1 is a diagram illustrating a schematic configuration of an information recommendation system according to an embodiment.

An information recommendation system S of the present embodiment includes a creation unit/archive unit/update unit server 1, a user/evaluation unit server 2, and a trust management framework 3.

The creation unit/archive unit/update unit server 1, the user/evaluation unit server 2, and the trust management framework 3, are each a device capable of various kinds of information processing, for example, an information processing device such as a server device, a computer, or the like. The information processing device includes an arithmetic element, a recording medium, and a communication interface, and further includes an input device such as a mouse or a keyboard, a display device such as a display, a network device, and the like.

The arithmetic element is, for example, a CPU (Central Processing Unit), a GPU (Graphics Processing Unit), an FPGA (Field-Programmable Gate Array), or the like. The recording medium is, for example, a magnetic recording medium such as an HDD (Hard Disk Drive), a semiconductor recording medium such as a RAM (Random Access Memory), a ROM (Read Only Memory), and an SSD (Solid State Drive), or the like. Additionally, a combination of an optical disk, such as a DVD (Digital Versatile Disk), and an optical disk drive is also used as the recording medium. Besides this, a publicly known recording medium such as a magnetic tape medium also can be used as the recording medium.

The recording medium stores a program such as firmware. When the information processing device is started to operate (e.g., when a power source is turned on), the program such as firmware is read out from the recording medium and is executed to control the entire information processing device. The recording medium also stores data and the like required for each processing of the information processing device other than the program.

The information processing device of the present embodiment may be configured as a so-called cloud in which respective information processing devices are communicatively configured via a communication network.

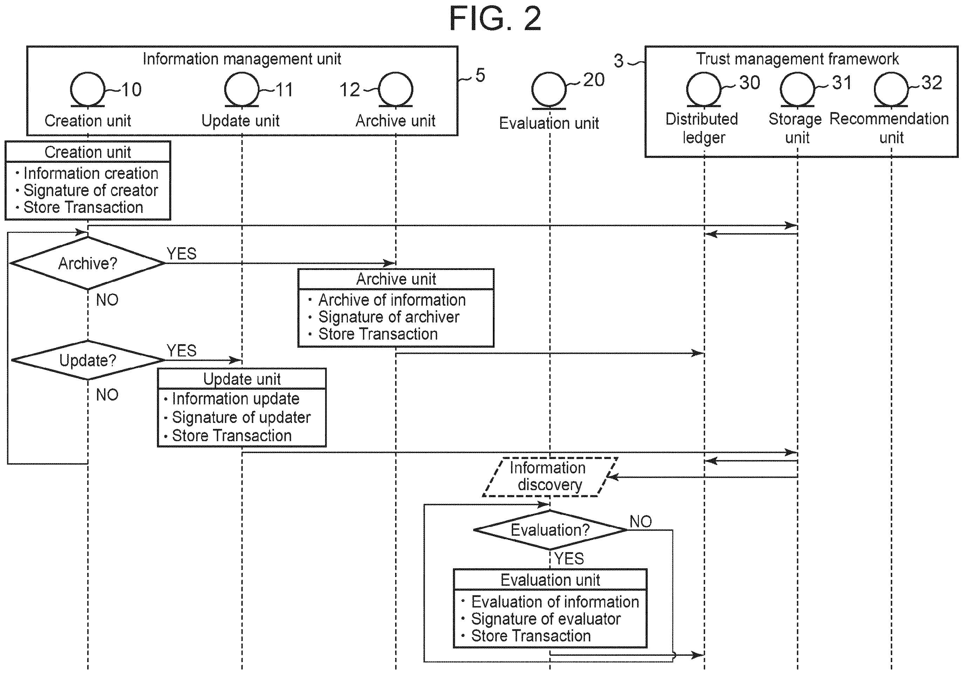

FIG. 2 is a sequence diagram illustrating information processing of the information recommendation system S according to the embodiment.

The creation unit/archive unit/update unit server 1 includes an information management unit 5. The information management unit 5 includes a creation unit 10, an update unit 11, and an archive unit 12. The user/evaluation unit server 2 includes an evaluation unit 20. The trust management framework 3 includes a distributed ledger 30, a storage unit 31, and a recommendation unit 32. Specific configurations of the creation unit 10 and the like will be described later.

The creation unit 10 is in charge of determining whether information needs an "archive" and an "update". The update unit 11 or the archive unit 12 also can determine whether an "archive" is necessary. The update unit 11 also can determine whether an "update" is necessary. The evaluation unit 20 determines whether "evaluation" is necessary.

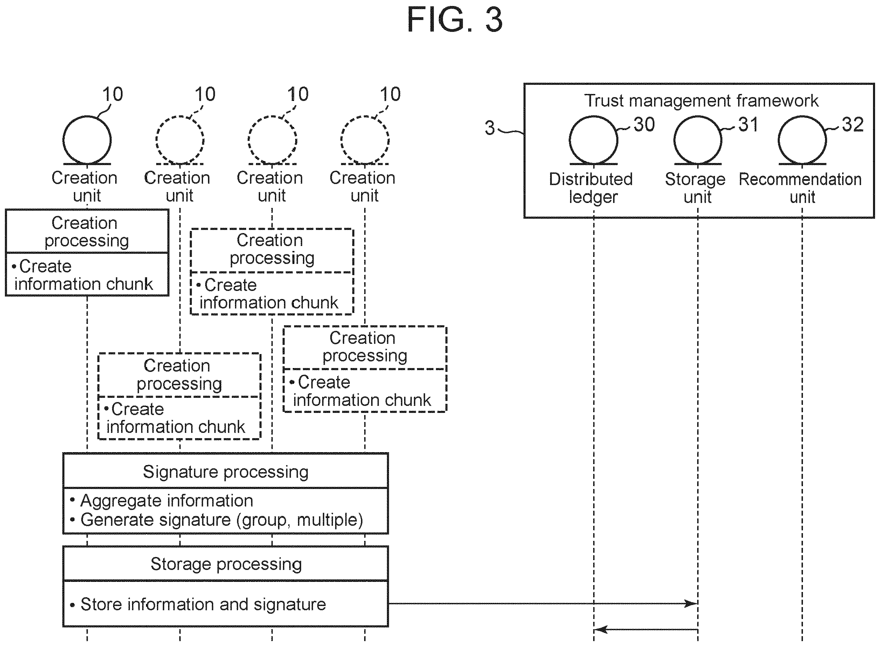

FIG. 3 is a sequence diagram illustrating information creation processing of the information recommendation system S according to the embodiment.

In general, one or more creation units 10 may be provided, and the number thereof is not limited. Although the example in the figure illustrates four creation units 10, this is mere an example.

The creation unit 10 creates information. Details of the information will be described later. Every creation unit 10 can create information in parallel. The creation unit 10 can create the information by inheriting existing information (partially or wholly). Inheritance as described above updates graph structure of information. Each creation unit 10 creates partial information. Every creation unit 10 aggregate information in a cooperative manner to create an information chunk, and then generating eventual information. Every creation unit 10 also works together to generate a signature (e.g., a group signature or multiple signatures in a chain). Then, every creation unit 10 works together to transmit the information and the signature (or signatures) to the storage unit 31 of the trust management framework 3.

When only a single creation unit 10 exists, the creation unit 10 takes charge of generating and aggregating information, generating a signature, and transmitting the signature to the trust management framework 3. As with multiple creation units 10, the single creation unit 10 also can select to inherit existing information (partially or wholly) during creation of information in a creation process.

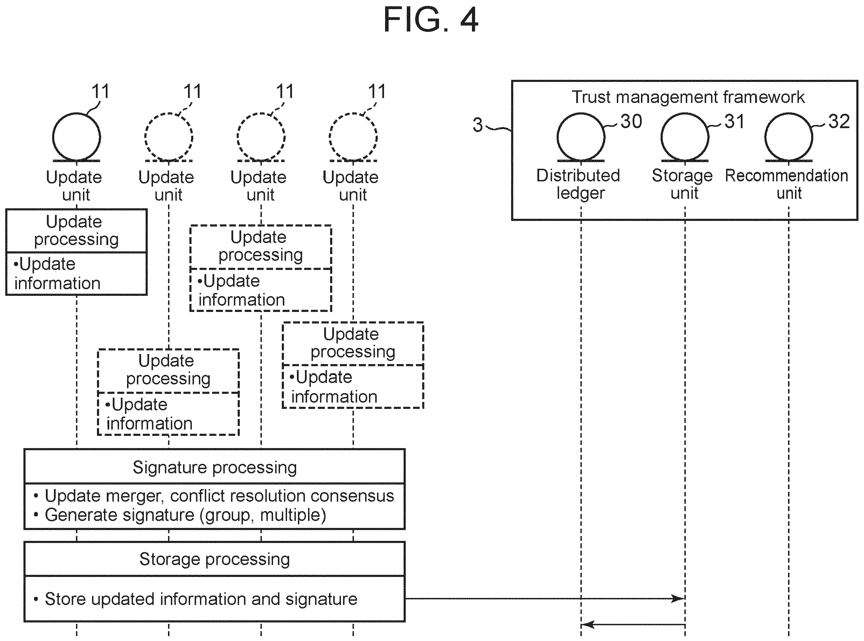

FIG. 4 is a sequence diagram illustrating information update processing of the information recommendation system S according to the embodiment.

In general, one or more update units 11 may be provided, and the number thereof is not limited. Although the example in the figure illustrates four update units 11, this is mere an example.

The update unit 11 creates information. The update unit 11 operates similarly to the creation unit 10. That is, every update unit 11 can create information in parallel. The update unit 11 can update the information by inheriting existing information (partially or wholly). Inheritance as described above updates graph structure of information. Every update unit 11 updates contradictory agreement of results as needed, and works together to merge respective updated portions, and then generating eventual updated contents. Every update unit 11 also works together to generate a signature (e.g., a group signature or multiple signatures in a chain). Then, every update unit 11 works together to transmit the information and the signature (or signatures) to the storage unit 31 of the trust management framework 3.

When only a single update unit 11 exists, the update unit 11 takes charge of updating information, generating a signature, and transmitting the signature to the trust management framework 3. As with multiple update units 11, the single update unit 11 also can select to inherit existing information (partially or wholly) during creation of information in a update.

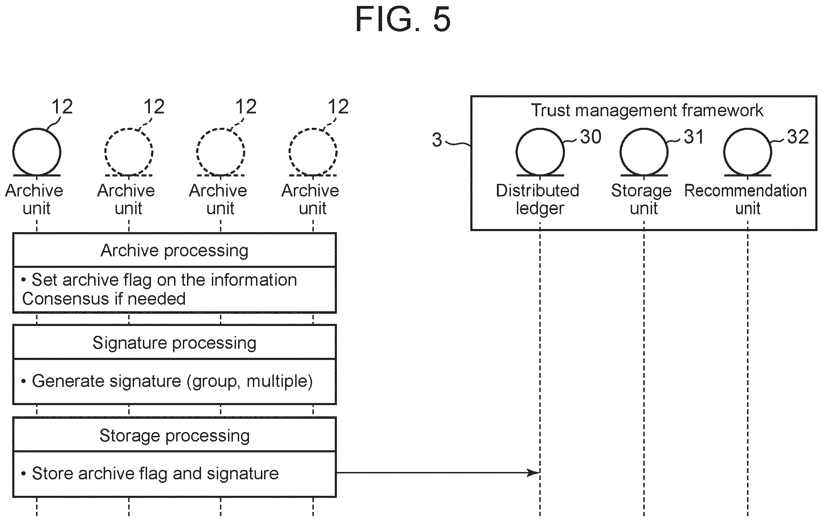

FIG. 5 is a sequence diagram illustrating information archive processing of the information recommendation system S according to the embodiment.

In general, one or more archive units 12 may be provided, and the number thereof is not limited. Although the example in the figure illustrates four archive units 12, this is mere an example.

The archive unit 12 archives information. Archiving information is equivalent to setting some flags on the information, the flags including a flag of "having archived". Besides this, flags of "deletion", "old", and the like are included. Every archive unit 12 works together to set a consensus archive flag, as needed.

Every archive unit 12 also works together to generate a signature (e.g., a group signature or multiple signatures in a chain). Then, every archive unit 12 works together to transmit the information and the signature (or signatures) to the storage unit 31 of the trust management framework 3.

When only a single archive unit 12 exists, the archive unit takes charge of setting an archive flag in which results are not required to be agreed, generating a signature, and transmitting the signature to the trust management framework 3.

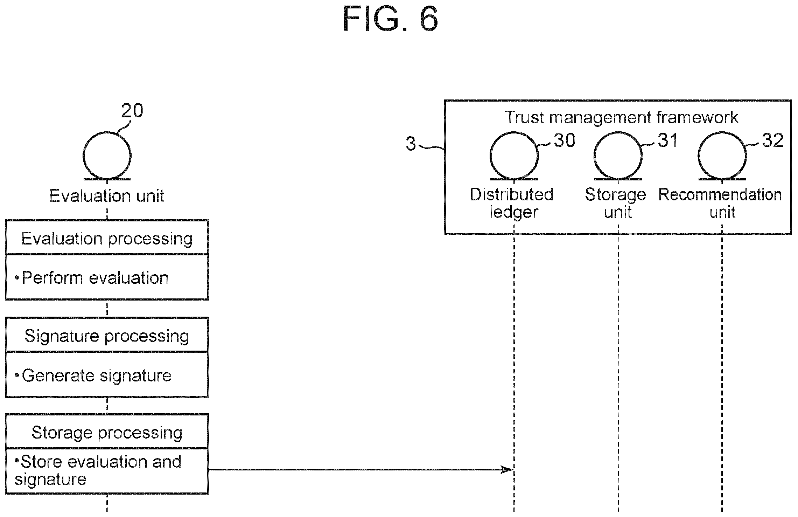

FIG. 6 is a sequence diagram illustrating information evaluation processing of the information recommendation system S according to the embodiment.

At least one evaluation unit 20 is required. The evaluation unit 20 evaluates information. Evaluation of information means that information is evaluated in the form of comment, for example. Next, the evaluation unit 20 adds a signature to the evaluated information. The evaluation and the signature acquired by the evaluation unit 20 are transmitted to the trust management framework 3.

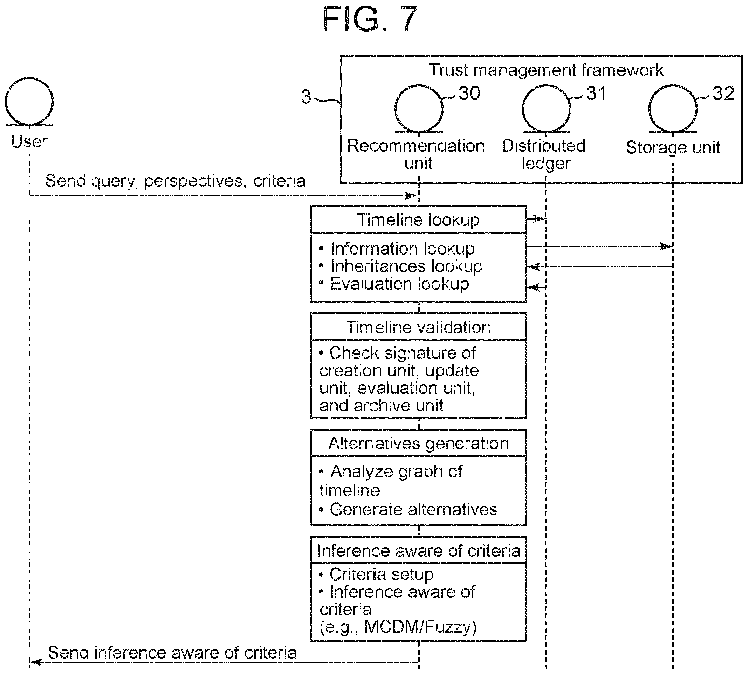

FIG. 7 is a sequence diagram illustrating inference processing of the information recommendation system S according to the embodiment.

The information recommendation system S of the present embodiment is configured such that the trust management framework 3, especially the recommendation unit 32 performs the inference processing.

The inference processing is performed after a time line is searched and verified. The inference processing with the recommendation unit 32 is a combination of creation of alternatives and decision making aware of "criteria". Although a "perspective "and "criteria" are designated by a user who requires a recommendation, the trust management framework also can create alternatives as a result of a query. Specifications of the "criteria" and the "perspective" are determined by the user. Disclosure may be selective, and may be a graph structure of an FOAF, for example.

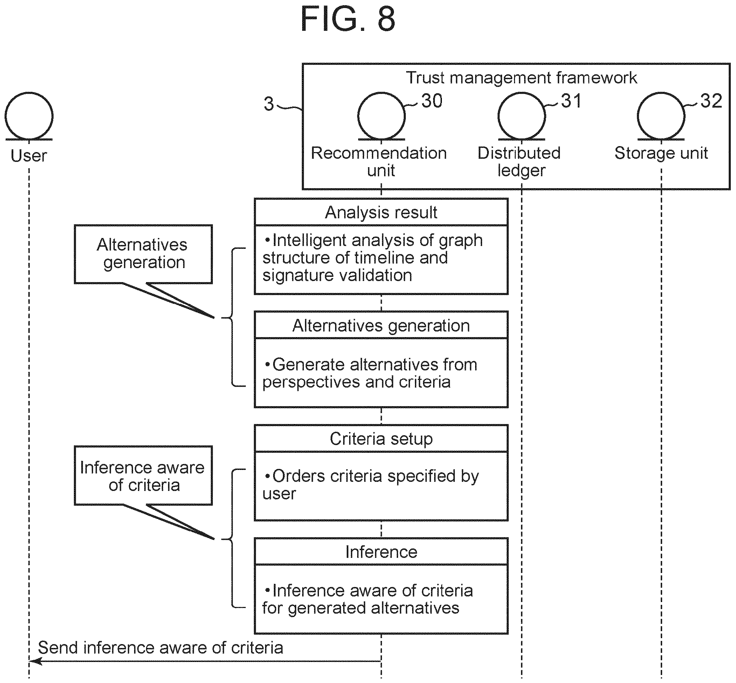

FIG. 8 is a sequence diagram illustrating details of inference processing of the information recommendation system S according to the embodiment.

Search results of a time line, including signature verification, based on a query transmitted by a user are analyzed using a rule or a machine learning model, for example. Subsequently, alternatives are created by using the "perspective" designated by the user, multiple results based on the query transmitted by the user, or both of them. Subsequently, the "criteria" designated by the user is ordered. The "criteria" are often subjective and inconsistent, and thus are required to be partially ordered for comparison.

Then, an eventual inference is determined as a result of comparing the ordered "criteria" with the alternatives through a Multi-Criteria Decision Making (MCDM) process such as an Analytic Hierarchy Process (AHP), for example. Additionally, the eventual inference can be further refined using a policy designated by the "perspective".

In other words, the recommendation unit 32 has a function aware of a context in consideration of historical evidence, and the "criteria" and the "perspective" to output a list of ranking that is ultimately and partially ordered. The function is performed by a method using a Multi-Criteria Decision Making (MCDM). For example, an MCDM process called an AHP is used. When the AHP is used, historical evidence and a comment is desirably analyzed for a recommended information item to create multiple alternatives from a "perspective" defined by a user. This analysis can be performed by a combination of one rank of the AHP and some machine learning model, a machine learning model, or some expert system. When an alternative is created, the alternative is compared with "criteria" to acquire eventual recommendation.

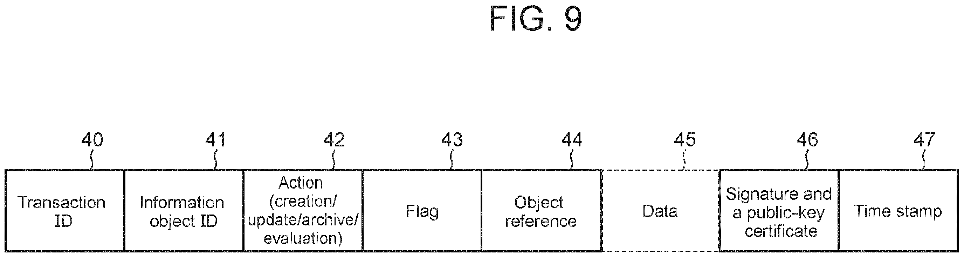

FIG. 9 is a diagram illustrating an example of a format of information used in the information recommendation system S according to the embodiment.

Evaluation of a life cycle event and information is recorded in a distributed ledger.

Information used in the information recommendation system S of the present embodiment includes a transaction ID 40, an information object ID 41, an action 42, a flag 43, an object reference 44, data 45, a signature and a public-key certificate 46, and a time stamp 47. FIG. 9 illustrates a field that does not include another field required in the distributed ledger itself, such as a block reference (link) and a block structure.

The transaction ID40 is a unique identifier in which a specific event or evaluation is recorded. The information object ID41 an identifier unique to the information object. When this transaction is evaluation, this ID is an identifier of an information object in which the evaluation is recorded. The action 42 describes a type of action represented by the transaction. The action is selected from a list of fixed sets such as creation, update, and archive. The flag 43 represents meta data on the action. For example, when the action 42 is update and the flag 43 is set to "deletion", the transaction is interpreted as representing deletion operation. The object reference 44 is, for example, a pointer in a URI (Uniform Resource Identifier) format for an actual information object in the storage unit 31. The data 45 is a field of an option and represents actual data for evaluation. Except for evaluation, actual data is not stored in the distributed ledger. (One or more) signatures and (one or more) public-key certificates 46 are useful not only in maintaining consistency of the transaction and data related thereto, but also in identifying an entity in charge of the transaction. The time stamp 47 is a time stamp when each field of information is created or updated.

The flag 43 and the data 45 can be expanded depending on a use case.

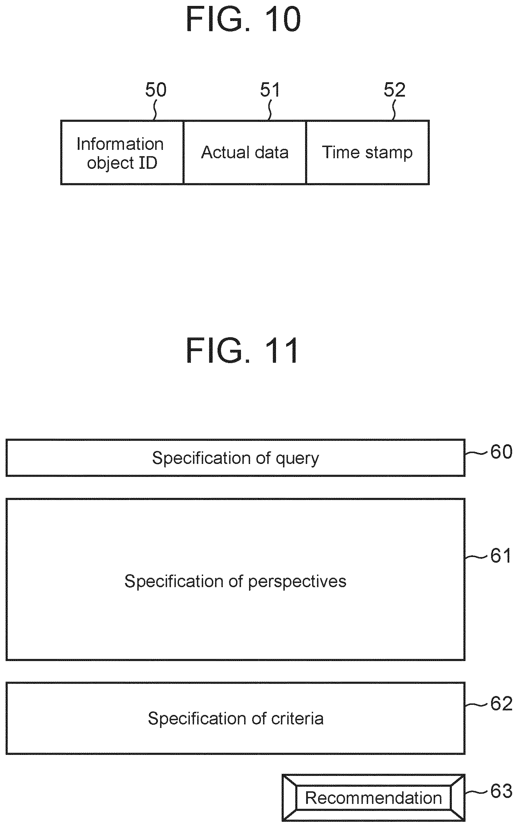

FIG. 10 is a diagram illustrating an example of a format of a database used in the information recommendation system S according to the embodiment.

Evaluation of a life cycle event and information is recorded in the distributed ledger.

The information recommendation system S of the present embodiment uses a database that includes an information object ID 50, actual data 51, and a time stamp 52. FIG. 10 illustrates a field that does not include another field required for the database itself.

The information object ID 50 is a unique identifier of an information object in the storage unit 31. The actual data 51 represents actual data on the information object. The time stamp 52 is a time stamp when each field of information is created or updated.

The actual data 51 can be expanded depending on a use case.

Next, a use case of the information recommendation system S of the present embodiment will be described.

First, a case will be described, in which the information recommendation system S of the present embodiment that is used for information recommendation to select a shared factory receiving orders from multiple companies, which has been already described. In this case, a company E desires to manufacture a product P and requires recommendation of a factory shared in the trust management framework 3.

Although the company E designates some parameters in a query for search, such as capability for manufacture, the parameters do not necessarily relate to design of the product P.

The company E transmits a "perspective" being a parameter for the search to the trust management framework 3. The "perspective" includes a graph structure illustrating a relationship between another company having evaluated the factory, i.e., a list of known companies, and the FOAF described above (with its weight). This case may include a specification for filtering evaluation, or another specification for a factory or desired capability of the factory.

The trust management framework 3 searches for the capability, and acquires results including zero or more factories in agreement with the capability. These results have items including historical official evidence of the factory, such as when the factory was established, and how capability of the factory has been updated. Each of the items of the results has historical public evaluation from a company having used the factory previously.

The company also designates "criteria" for selection. The "criteria" may be inconsistent and subjective. These specifications are, for example, essential features required from recommendation by a company when the company fixes an order of priority of a set of specific features to another specific feature.

The trust management framework 3 orders, or partially orders, the designated "criteria". This can be achieved by using, for example, a Pairwise Comparison method using an AHP.

The trust management framework 3 applies a machine learning model, which is only an example, to the results including the designated "perspective" to create two or more alternatives aligned based on the "criteria". When a first query has two or more results, this step enables generating alternatives (i.e., alternative views) more than an actual number of results.

Subsequently, the trust management framework 3 allows the ordered "criteria" to agree with the corresponding alternatives by using the AHP, for example, to provide ranking of the results. Along with the "perspective" that can be used for further refining the ranking of the results, additional policy specifications may be provided from the company.

Next, a use case will be described in which the information recommendation system S of the present embodiment is used when an end user purchases a product. In this use case, a user U considers purchasing a product, and the user requires recommendation of the trust management framework 3.

The user U designates some parameters in a query for search, such as specifications of a desired product. The user U also specifies a "perspective" to be provided to the trust management framework 3. One of the "perspective" includes a graph structure of a relationship between another user who may comment on the product based on its experience and the user.

The trust management framework 3 performs the search to acquire results including zero or more products in agreement with the parameters for the search. The results have items including a set of historical official evidence for a life cycle of the product and comment (evaluation).

The user U also designates "criteria" of preference for which alternatives are created using the "perspective" defined by the user and/or another factor.

The trust management framework 3 partially sorts the designated "criteria" through the AHP, for example.

The trust management framework 3 applies a machine learning model example to, for example, the results including the designated "perspective" to create two or more alternatives aligned based on the "criteria". Subsequently, the trust management framework 3 allows the ordered "criteria" to agree with the corresponding alternatives by using the AHP, for example, to provide ranking of the results. This can be further refined by a policy designated by the user, such as providing a high weight to an alternative created from a comment from a specific friend.

FIG. 11 is a diagram illustrating an example of an input screen in the information recommendation system S according to the embodiment.

FIG. 11 illustrates the input screen that includes a query input window 60, a "perspective" input window 61, and a "criteria" input window 62. The user inputs a query, a "perspective ", and "criteria" into the input windows 60 to 62, respectively. Then, the user clicks a recommendation button 63 to transmit the query and the like to the trust management framework 3.

Specifications of the query, and an interface between the "perspective" and the "criteria", depends on a use case.

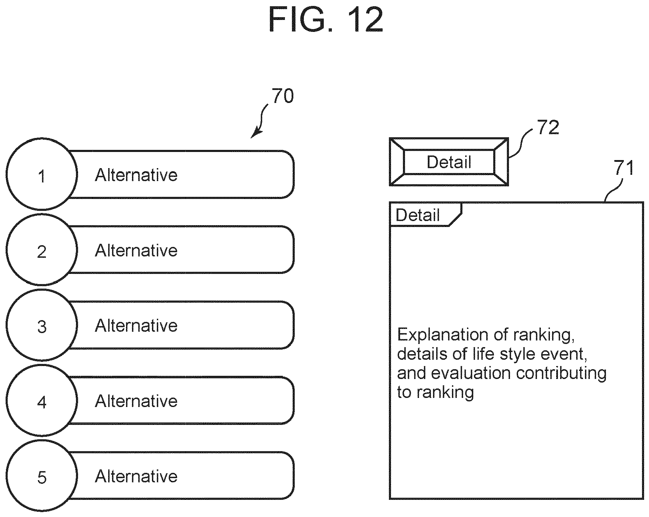

FIG. 12 is a diagram illustrating an example of an output screen in the information recommendation system according to the embodiment.

FIG. 12 illustrates the output screen that includes an alternative display 70 that displays the alternatives sorted by the recommendation unit 32 of the trust management framework 3, and a detail display 71 that displays detailed contents. The user clicks a detail button 72 to know how the alternatives displayed on the alternative display 70 are ranked, and what are a life cycle event and evaluation that contribute when this ranking is created. The trust management framework 3 allows the detail display 71 to display the detailed contents described above once the detail button 72 is clicked. An interface of the detailed contents to be displayed on the detail display 71 differs depending on a use case.

Thus, the present embodiment enables achieving an information recommendation system and a method for recommending information, being capable of recommending information personalized depending on user's preference.

The information recommendation system S of the present embodiment enables decision making based on information by tracing a source of information during a life cycle, a change history, and evaluation during the life cycle. The system also enables an inference to be expanded to transparent from evidence that can be described. The system further promotes expansion of a personalized inference to result in empowerment of confidence.

In particular, a preference of a company can be designated in a use case of a shared factory, based on an action history that is evaluated and recorded, and another time line information, to acquire recommendation aware of "criteria" of the shared factory.

In a use case of recommendation of a product of a service, a user can acquire personalized recommendation in the following case. That is, personalized "criteria" can be corrected or selectively disclosed under control of a user, and an inference is transparent and derived from evidence that can be checked by a user.

The embodiment above describes a configuration in detail for easy understanding of the present invention, and the present invention is not necessarily limited to the embodiment including every described configuration. A part of the configuration of each embodiment can be added to another configuration, deleted, or replaced.

Each of the configurations, the functions, the processing units, the processing means, and the like, which are described above, may be achieved by hardware by designing a part or the whole of them using an integrated circuit, for example. The present invention also can be achieved by program codes of software executing the functions of the embodiment. In this case, a recording medium recording the program codes is provided to a computer, a processor provided in the computer reads out the program codes stored in the recording medium. This case allows the program codes themselves read out from the recording medium to achieve the functions of the embodiment described above. Thus, the program codes themselves and the recording medium storing them constitute the present invention. Examples of a recording medium used for supplying this kind of program code include a flexible disk, a CD-ROM, a DVD-ROM, a hard disk, an SSD (Solid State Drive), an optical disk, a magneto-optical disk, a CD-R, a magnetic tape, a nonvolatile memory card, a ROM, and the like.

The program codes achieving the functions descried in the present embodiment can be implemented, for example, with program or script languages of a wide range, such as assembler, C/C++, perl, Shell, PHP, and Java (registered trademark).

The program codes of software achieving the functions of the embodiment, and being stored in a recording medium in a distribution source device, may be distributed via a network, and stored in storage means of a computer, such as a hard disk and a memory, or a recording medium such as a CD-RW and a CD-R, and then a processor provided in the computer may read out the program codes stored in the storage means or the recording medium and execute the program codes.

Control lines and information lines described in the embodiment above are considered to be necessary for description, so that every control line and information line is not necessarily described for a product. All configurations may be connected to each other.

## Claims

1. An information recommendation system comprising a trust management unit that generates alternatives of information that has a history and is evaluated, based on a perspective about adoption criteria for evaluation of the information input to search the information, and criteria for ranking the information, being input to search the information.

2. The information recommendation system according to claim 1, wherein the trust management unit generates the alternatives of the information based on the perspective, and generates ranking of the criteria based on the alternatives.

3. The information recommendation system according to claim 1, further comprising:
a creation unit that creates the information together with a history of creation of the information;
an update unit that updates the information together with a history of update of the information; and
an evaluation unit that evaluates the information.

4. The information recommendation system according to claim 3, wherein
the creation unit adds a signature to the information when generating the information,
the update unit adds a signature to the information when updating the information, and
the evaluation unit adds a signature to the information when evaluating the information.

5. The information recommendation system according to claim 3, further comprising an archive unit that archives the information together with a history of archive of the information.

6. The information recommendation system according to claim 5, wherein the archive unit adds a signature to the information when archiving the information.

7. The information recommendation system according to claim 1, wherein the trust management unit manages the information together with the history and the evaluation.

8. The information recommendation system according to claim 7, wherein the trust management unit manages the information as a distributed ledger.

9. The information recommendation system according to claim 1, wherein the trust management unit generates the alternatives of the information based on multi-criteria decision making.

10. The information recommendation system according to claim 1, wherein the history has a graph structure.

11. A method for recommending information using an information recommendation system including a trust management unit, the method comprising generating alternatives of information that has a history and is evaluated, based on a perspective about adoption criteria for evaluation of the information input to search the information, and criteria for information, being input to search the information.
